(19) Europäisches Patentamt
European Patent Office
Office européen des brevets

(11) **EP 4 765 803 A1**

(12) **EUROPEAN PATENT APPLICATION**

(43) Date of publication:
**24.06.2026  Bulletin 2026/26**

(21) Application number: **24307288.1**

(22) Date of filing: **23.12.2024**

(51) International Patent Classification (IPC):
***H04N 19/11*** (2014.01)      ***H04N 19/12*** (2014.01)
***H04N 19/176*** (2014.01)      ***H04N 19/593*** (2014.01)

(52) Cooperative Patent Classification (CPC):
**H04N 19/11; H04N 19/12; H04N 19/176;**
**H04N 19/593**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BONNINEAU, Charles**
**MONTREAL, H2J 1G1 (CA)**
• **PURI, Saurabh**
**SAINT-LAZARE, J7T 0P6 (CA)**
• **UTIDA BARBOSA FERREIRA, Renan**
**MONTREAL, H1X3H7 (CA)**
• **NASER, Karam**
**35250 MOUAZE (FR)**

(74) Representative: **Vossius & Partner**
**Patentanwälte Rechtsanwälte mbB**
**Siebertstraße 3**
**81675 München (DE)**

(54) **TRANSFORM SET SELECTION BASED ON TEMPLATE COST ANALYSIS**

(57)    Systems, methods, and instrumentalities are disclosed for transform set selection based on template cost analysis. For example, a device (e.g., a video encoding device and/or a video decoding device) may obtain at least one prediction sample. The device may obtain a histogram of gradient (HoG). The device may determine whether to perform a template cost analysis. Based on a determination to perform the template cost analysis, the device may obtain at least one intra mode candidate based on the HoG. The device may determine a respective template cost associated with at least one intra mode candidate. The device may reorder at least one intra mode candidate. The device may obtain at least one virtual intra prediction mode (VIPM). The device may obtain a transform set and obtain a transform kernel. The video decoding device may decode the current block, and the video encoding device may encode the current block.

FIG. 21

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for transform set selection based on template cost analysis.

In examples, a video decoding device may include one or more processors. The one or more processors may be configured to perform one or more of the following.

The video decoding device may obtain at least one prediction sample associated with a current block. The video decoding device may obtain (e.g., also obtain) at least one neighboring reconstructed sample that is associated with the current block. Based on at least one prediction sample and/or at least one neighboring reconstructed sample, the video decoding device may obtain a histogram of gradient (HoG).

The video decoding device may determine whether to perform a template cost analysis. In examples, the video decoding device may determine that the HoG shows a strong directionality. Based on the determination that the HoG does not show the strong directionality, the video decoding device may perform the template cost analysis. Based on the determination that the HoG shows the strong directionality, the video decoding device may skip performing the template cost analysis.

In examples, the video decoding device may determine that at least one special intra mode is enabled. At least one special intra mode may be, or may include, at least one of a matrix-based intra prediction (MIP) mode, an extrapolation filter-based intra prediction (EIP) mode, an intra template matching prediction (ITMP) mode, a decoder side intra mode derivation (DIMD) mode, a template-based intra mode derivation (TIMD), an intra block copy (IBC) mode, or an inter mode. Based on the determination that at least one special intra mode is enabled, the video decoding device may perform the template cost analysis. Based on the determination that the special intra mode is disabled, the video decoding device may skip performing the template cost analysis.

Based on a determination to perform the template cost analysis, the video decoding device may obtain at least one intra mode candidate based on the HoG.

The video decoding device may determine a respective template cost associated with at least one intra mode candidate. The video decoding device may reorder at least one intra mode candidate based on the respective template cost.

Based on at least one intra mode candidate, the video decoding device may obtain at least one virtual intra prediction mode (VIPM). For example, the video decoding device may determine an intra mode candidate with the lowest template cost (e.g., from the reordered at least one intra mode candidate). The video decoding device may obtain at least one VIPM based on the intra mode candidate with the lowest template cost.

Based on at least one VIPM, the video decoding device may obtain a transform set. Based on the transform set, the video decoding device may obtain a transform kernel.

The video decoding device may decode the current block based on the transform kernel. For example, the video decoding device may obtain one or more transform coefficients. The video decoding device may perform an inverse transform of the one or more transform coefficients using the transform kernel to decode the current block.

In examples, a video encoding device may include one or more processors. The one or more processors may be configured to perform one or more of the following.

The video encoding device may obtain at least one prediction sample associated with a current block. The video encoding device may obtain (e.g., also obtain) at least one neighboring reconstructed sample that is associated with the current block. Based on at least one prediction sample and/or at least one neighboring reconstructed sample, the video encoding device may obtain a HoG.

The video encoding device may determine whether to perform a template cost analysis. In examples, the video encoding device may determine that the HoG shows a strong directionality. Based on the determination that the HoG does not show the strong directionality, the video encoding device may perform the template cost analysis. Based on the determination that the HoG shows the strong directionality, the video encoding device may skip performing the template cost analysis.

In examples, the video encoding device may determine that at least one special intra mode is enabled. At least one special intra mode may be, or may include, at least one of an MIP mode, an EIP mode, an ITMP mode, a DIMD mode, a TIMD, an IBC mode, or an inter mode. Based on the determination that at least one special intra mode is enabled, the video encoding device may perform the template cost analysis. Based on the determination that the special intra mode is disabled, the video encoding device may skip performing the template cost analysis.

Based on a determination to perform the template cost analysis, the video encoding device may obtain at least one intra mode candidate based on the HoG.

The video encoding device may determine a respective template cost associated with at least one intra mode candidate. The video encoding device may reorder at least one intra mode candidate based on the respective template cost.

Based on at least one intra mode candidate, the video encoding device may obtain at least one virtual intra prediction mode (VIPM). For example, the video encoding device may determine an intra mode candidate with the lowest template cost (e.g., from the reordered at least one intra mode candidate). The video encoding device may obtain at least one VIPM based on the intra mode candidate with the lowest template cost.

Based on at least one VIPM, the video encoding device may obtain a transform set. Based on the transform set, the video encoding device may obtain a transform kernel.

The video encoding device may encode the current block based on the transform kernel. For example, the video encoding device may obtain one or more transform coefficients. The video encoding device may perform a transform of one or more residual coefficients using the transform kernel to encode the current block.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates examples of neighboring blocks that may be used to derive a most probable modes (MPM) list.
FIG. 5 illustrates an example of histogram of gradients (HoG) computation from a template, e.g., with a width of three pixels.
FIG. 6 illustrates an example of prediction fusion.
FIG. 7 illustrates an example of Intra template matching (IntraTMP) search area.
FIG. 8 illustrates examples of extrapolation filter-based intra prediction mode (EIP) filter shapes that may be used.
FIG. 9 illustrates example types of reconstructed areas that may be used for EIP.
FIG. 10 illustrates an example of using EIP to generate prediction values for a current block from the top-left position to the bottom-right position by a diagonal prediction order.
FIG. 11 illustrates examples of spatial geometric partitioning mode (GMP) candidates.
FIG. 12 illustrates an example of GPM template.
FIG. 13 illustrates examples of GPM blending.
FIG. 14 illustrates an example of using an IntraTMP block vector for an intra block copy (IBC) block.
FIG. 15 illustrates an example of an explicit multiple transform selection (MTS) set selection (e.g., modeldx=4 and sizeldx=0).
FIG. 16 illustrates an example region-of-interest (ROI) for low-frequency non-separable transform16 (LFNST16).
FIG. 17 illustrates an example an example ROI for LFNST8.
FIG. 18 illustrates an example of block sizes for which non-separable primary transform (NSPT) may be applied, where LFNST may be applied for the rest.
FIG. 19 illustrates an example decoder process of multiple transform set selection (MTSS) .
FIG. 20 illustrates an example transform set derivation process (e.g., for a decoder side).
FIG. 21 illustrates an example transform set derivation using the template cost process (e.g., for a decoder side).
FIG. 22 illustrates an example transform set derivation using template cost for the MTSS process (e.g., for a decoder side).

## DETAILED DESCRIPTION

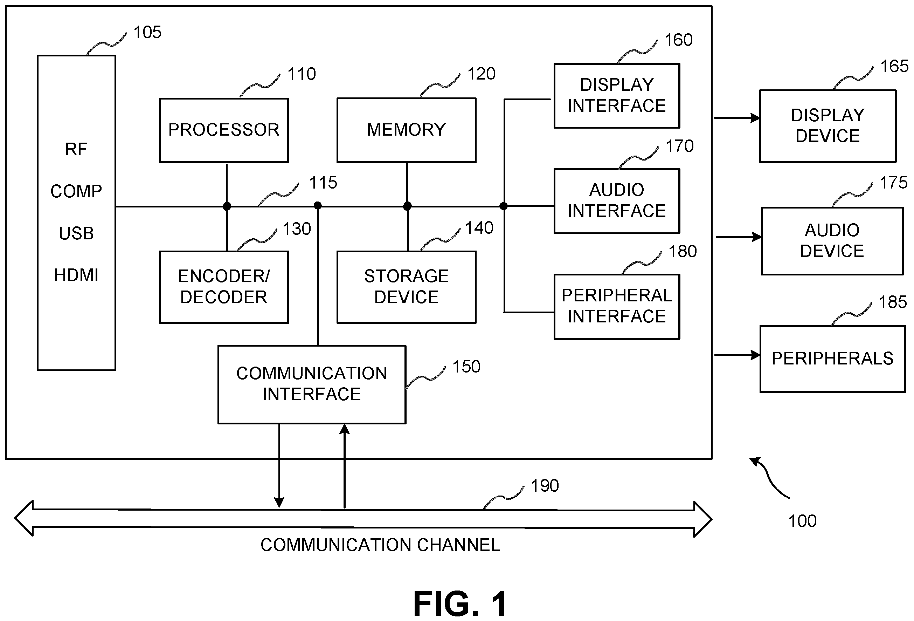

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g., cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

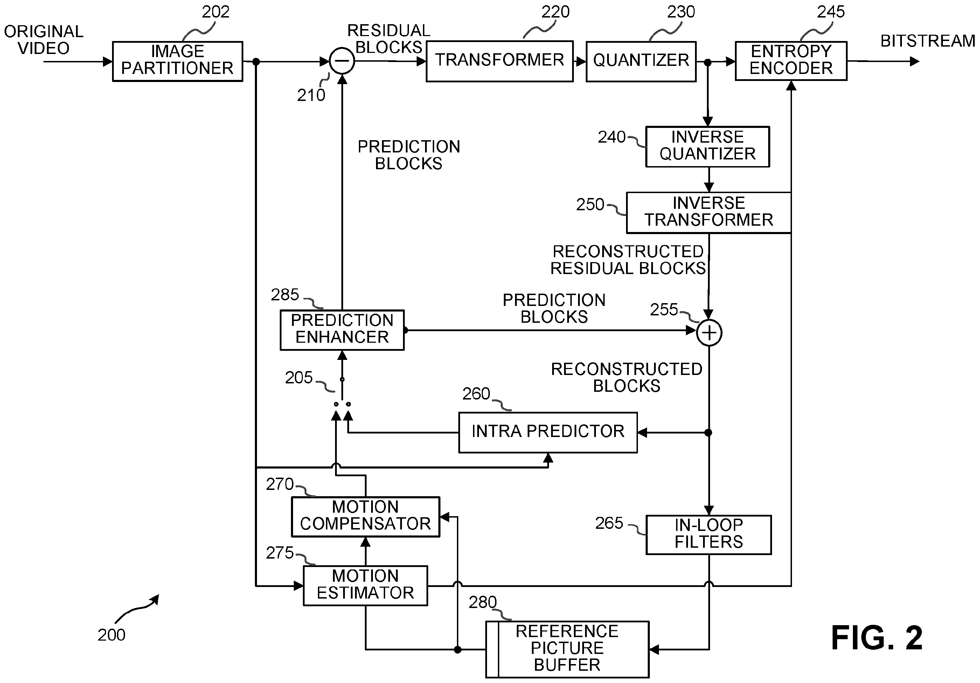

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

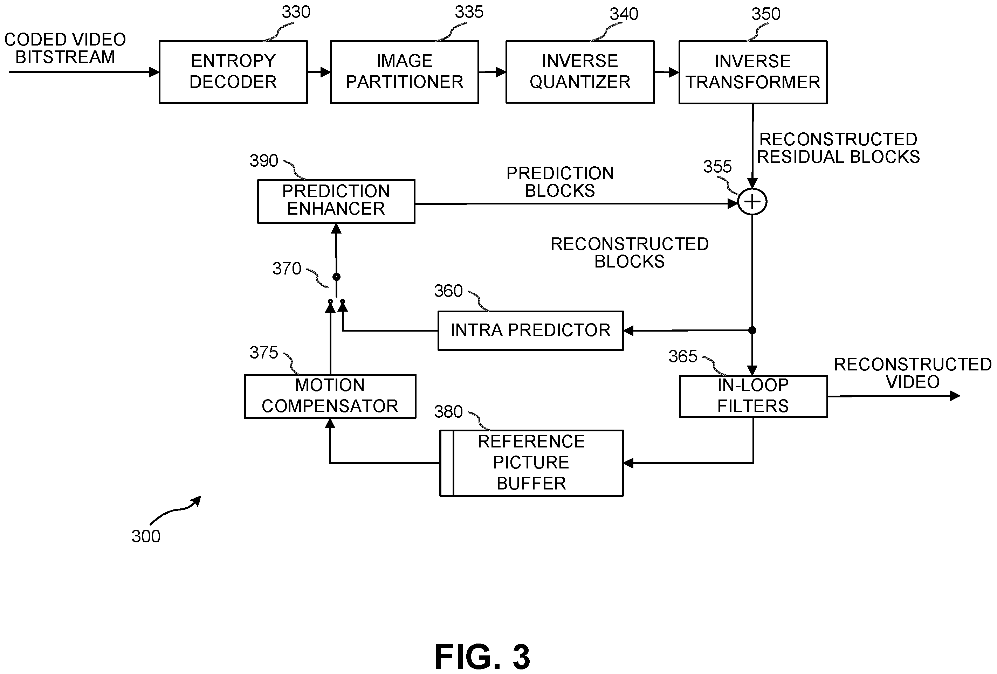

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for transform set selection based on template cost analysis.

In examples, a video decoding device may include one or more processors. The one or more processors may be configured to perform one or more of the following.

The video decoding device may obtain at least one prediction sample associated with a current block. The video decoding device may obtain (e.g., also obtain) at least one neighboring reconstructed sample that is associated with the current block. Based on at least one prediction sample and/or at least one neighboring reconstructed sample, the video decoding device may obtain a histogram of gradient (HoG).

The video decoding device may determine whether to perform a template cost analysis. In examples, the video decoding device may determine that the HoG shows a strong directionality. Based on the determination that the HoG does not show the strong directionality, the video decoding device may perform the template cost analysis. Based on the determination that the HoG shows the strong directionality, the video decoding device may skip performing the template cost analysis.

In examples, the video decoding device may determine that at least one special intra mode is enabled. At least one special intra mode may be, or may include, at least one of a matrix-based intra prediction (MIP) mode, an extrapolation filter-based intra prediction (EIP) mode, an intra template matching prediction (ITMP) mode, a decoder side intra mode derivation (DIMD) mode, a template-based intra mode derivation (TIMD), an intra block copy (IBC) mode, or an inter mode. Based on the determination that at least one special intra mode is enabled, the video decoding device may perform the template cost analysis. Based on the determination that the special intra mode is disabled, the video decoding device may skip performing the template cost analysis.

Based on a determination to perform the template cost analysis, the video decoding device may obtain at least one intra mode candidate based on the HoG.

The video decoding device may determine a respective template cost associated with at least one intra mode candidate. The video decoding device may reorder at least one intra mode candidate based on the respective template cost.

Based on at least one intra mode candidate, the video decoding device may obtain at least one virtual intra prediction mode (VIPM). For example, the video decoding device may determine an intra mode candidate with the lowest template cost (e.g., from the reordered at least one intra mode candidate). The video decoding device may obtain at least one VIPM based on the intra mode candidate with the lowest template cost.

Based on at least one VIPM, the video decoding device may obtain a transform set. Based on the transform set, the video decoding device may obtain a transform kernel.

The video decoding device may decode the current block based on the transform kernel. For example, the video decoding device may obtain one or more transform coefficients. The video decoding device may perform an inverse transform of the one or more transform coefficients using the transform kernel to decode the current block.

In examples, a video encoding device may include one or more processors. The one or more processors may be configured to perform one or more of the following.

The video encoding device may obtain at least one prediction sample associated with a current block. The video encoding device may obtain (e.g., also obtain) at least one neighboring reconstructed sample that is associated with the current block. Based on at least one prediction sample and/or at least one neighboring reconstructed sample, the video encoding device may obtain a HoG.

The video encoding device may determine whether to perform a template cost analysis. In examples, the video encoding device may determine that the HoG shows a strong directionality. Based on the determination that the HoG does not show the strong directionality, the video encoding device may perform the template cost analysis. Based on the determination that the HoG shows the strong directionality, the video encoding device may skip performing the template cost analysis.

In examples, the video encoding device may determine that at least one special intra mode is enabled. At least one special intra mode may be, or may include, at least one of an MIP mode, an EIP mode, an ITMP mode, a DIMD mode, a TIMD, an IBC mode, or an inter mode. Based on the determination that at least one special intra mode is enabled, the video encoding device may perform the template cost analysis. Based on the determination that the special intra mode is disabled, the video encoding device may skip performing the template cost analysis.

Based on a determination to perform the template cost analysis, the video encoding device may obtain at least one intra mode candidate based on the HoG.

The video encoding device may determine a respective template cost associated with at least one intra mode candidate. The video encoding device may reorder at least one intra mode candidate based on the respective template cost.

Based on at least one intra mode candidate, the video encoding device may obtain at least one VIPM. For example, the video encoding device may determine an intra mode candidate with the lowest template cost (e.g., from the reordered at least one intra mode candidate). The video encoding device may obtain at least one VIPM based on the intra mode candidate with the lowest template cost.

Based on at least one VIPM, the video encoding device may obtain a transform set. Based on the transform set, the video encoding device may obtain a transform kernel.

The video encoding device may encode the current block based on the transform kernel. For example, the video encoding device may obtain one or more transform coefficients. The video encoding device may perform a transform of one or more residual coefficients using the transform kernel to encode the current block.

Systems, methods, and instrumentalities are disclosed for transform set selection. For example, systems, methods, and instrumentalities are disclosed for transform set selection based on a template cost analysis, e.g., aiming to improve the transform coding part. A strategy (e.g., a new strategy) may be configured and/or used to select the transform set for special intra modes. For special intra modes, a virtual intra prediction mode (VIPM) may be computed based on the histogram of gradients (HoG), e.g., to infer a transform set in the intra multiple transform selection (MTS) or low-frequency non-separable transform (LFNST)/non-separable primary transform (NSPT) lookup-table (LUT). The statistics of the HoG may differ from the actual residual statistics of the block. As described herein, a stage (e.g., an extra stage) in the VIPM derivation process may be added. For example, an extra stage in the VPIM derivation process may be added by adding a template cost analysis to refine the VIPM computation (e.g., to enhance the coding performance by improving the transform set selection process).

Intra mode may be associated with one or more of the following: primary and secondary most probable mode (MPM); occurrence-based intra coding (OBIC); intra template matching; extrapolation filter-based intra prediction mode (EIP); spatial geometric partitioning mode (SGPM); template-based intra mode derivation (TIMD); and/or most dominant intra-prediction mode (MDIP).

In examples, intra mode may be associated with a primary and/or a secondary MPM.

Multiple lists of MPMs may be provided, including, for example, a primary MPM list and a secondary MPM list. The primary MPM (PMPM) list may include a first number of (e.g., 6) entries (e.g., representing different coding modes), and the secondary MPM (SMPM) list may include a second number of (e.g., 16) entries. In examples, a video coding device (e.g., an encoder or a decoder) may construct a general MPM list (e.g., with 22 entries) and select a first subset of entries (e.g., the first 6 entries) in this general MPM list to form the PMPM list, and a second subset of entries (e.g., the rest of the entries) in this general MPM list to form the SMPM list. The first entry in the general MPM list may correspond to a Planar mode.

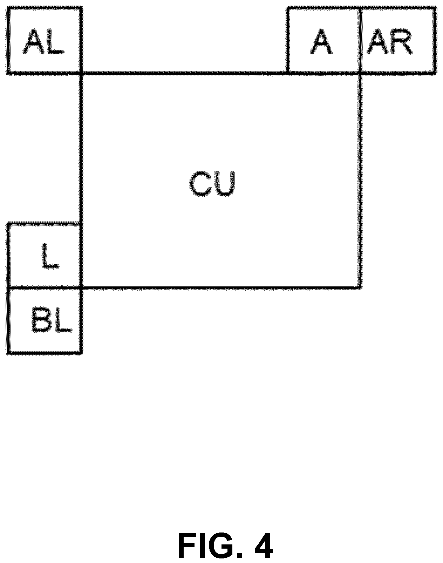

Other entries in the general MPM list may include intra modes based on the left (L), above (A), below-left (BL), above-right (AR), and above-left (AL) neighboring blocks of a current block (e.g., a current coding unit (CU)), as illustrated by FIG. 4. Probable decoder side intra mode derivation (DIMD) modes may be sorted in an ascending order of sum of absolute differences (SAD) costs. A number of (e.g., up to 5) modes with the smallest SAD costs may be added to the general MPM list. The SAD costs may be obtained (e.g., computed) between the prediction and the reconstruction samples of a template. In examples, sorted directional modes with added offset may be added to the general MPM list, followed by one or more default modes, until the general MPM list (e.g., with 22 entries) is constructed.

FIG. 4 illustrates examples of neighboring blocks that may be used to derive an MPM list. In the example shown in FIG. 4, if the CU block is vertically oriented, the neighboring blocks may be used in the following order during the construction of the general MPM list: above (A), left (L), below left (BL), above right (AR), and/or above left (AL); if the CU block is horizontally oriented, the neighboring blocks may be used in the following order during the construction of the general MPM list: L, A, BL, AR, and/or AL.

In examples, the MPM list may be divided (e.g., equally divided into four groups), and indices may be assigned to the groups and/or the modes within each group. A video decoding device (e.g., a decoder) may parse the group indices and/or mode indices to determine which mode in a selected group may be used.

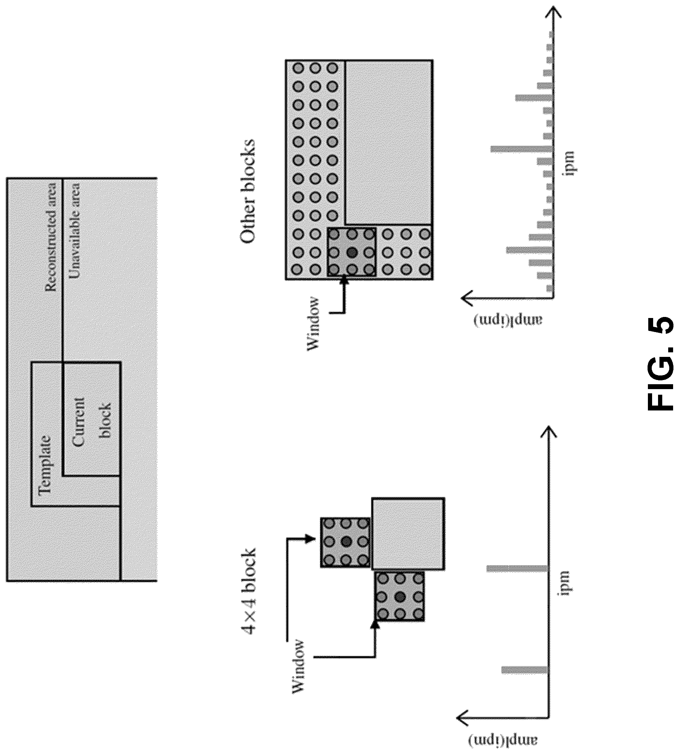

In examples (e.g., if DIMD is applied), one or more (e.g., up to five) intra modes may be derived from reconstructed neighboring samples, for example, based on a histogram of gradients (HoG). The HoG may be determined (e.g., computed) by applying horizontal and vertical Sobel filters on pixels in a template (e.g., of width 3) around a video block, as illustrated by FIG. 5. FIG. 5 illustrates an example of HoG computation from a template, e.g., with a width of three pixels. Once determined, the intra prediction modes (IPMs) corresponding to one or more (e.g., the top two) tallest histogram bars may be selected for the video block.

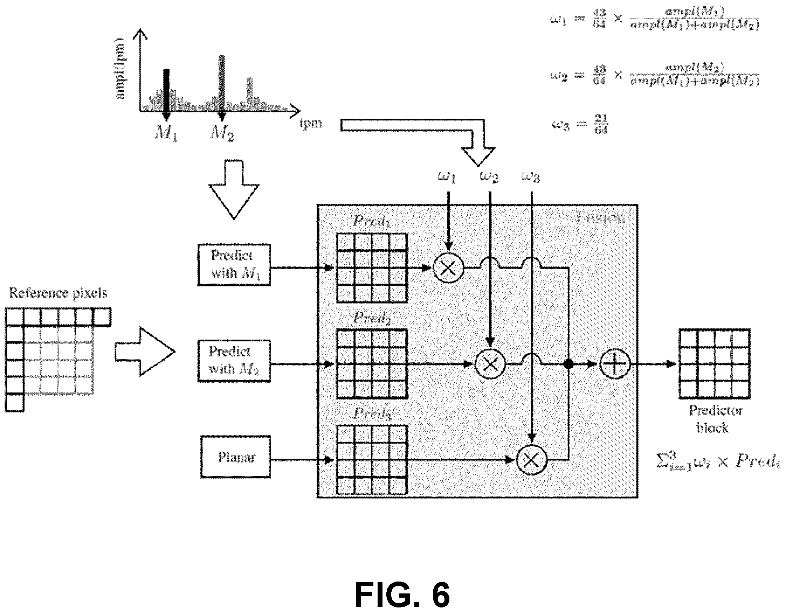

In examples, a number of (e.g., up to five) intra modes may be derived from reconstructed neighbor samples. Predictors (e.g., five predictors) associated with those intra modes may be combined with a planar mode predictor (e.g., based on a weighted average of the predictors and using weights derived from a histogram of gradients amplitudes), as illustrated by FIG. 6. FIG. 6 illustrates an example of prediction fusion.

For a block of size W×H, the weight for each of the derived modes (e.g., predictors) may be modified if one of the above or left histogram magnitudes is larger (e.g., twice as large) than the other one. In that case, the weights may be location dependent and may be computed as follows:

If the above histogram magnitude is twice the left histogram, then:

$$w_i(x, y) = wDimd_i + \Delta_i - 2\Delta_i \frac{y}{(H-1)}$$

If the left histogram magnitude is twice the above histogram, then:

$$w_i(x, y) = wDimd_i + \Delta_i - 2\Delta_i \frac{x}{(W-1)}$$

where $wDimd_i$ may be the unmodified uniform weight of the DIMD selected, and $\Delta_i$ may be predefined and set to 10.

Derived intra modes may be included in a primary list of intra MPM. DIMD operations may be performed before the MPM list is constructed. The primary derived intra mode of a DIMD block may be stored with the block and used for MPM list construction for one or more neighboring blocks.

In examples, intra mode may be associated with OBIC.

For example, OBIC mode may be employed. The OBIC mode may derive one or more intra prediction modes of a current block, e.g., based on the sample-wise occurrence of the intra modes in the spatial neighborhood of the block. One or more adjacent and/or non-adjacent spatial neighboring blocks may be checked. The intra prediction modes of the blocks may be collected into an occurrence histogram. DIMD mode may employ a HoG. OBIC may use a Histogram of occurrence (HoC). The HoC may be, or may include, the intra modes and their associated sample-wise occurrences. The occurrence values may be obtained and/or calculated based on the number of samples that are coded in a particular intra prediction mode in that neighborhood.

In examples, if a uiWidth × uiHeight block is coded with an IPM mode, the occurrence of the mode in that particular block may be obtained (e.g., calculated) as follows:

HoC[IPM] += uiWidth × uiHeight.

uiWidth and uiHeight may represent the width and the height, respectively, of a spatial neighboring block.

The occurrences of the existing modes from the spatial neighborhood blocks may be accumulated into the histogram.

Up to, for example, five (5) angular modes with the high occurrence (e.g., the highest occurrence) may be selected from the HoC along with the planar mode or the BV-based mode and may be used for final prediction by blending the prediction of the selected modes.

The blending weights may be obtained (e.g., calculated) similarly to the DIMD mode, but instead of using gradient values from the template as with DIMD mode, occurrence values are used for OBIC. The weight of the planar mode or the BV-based mode may be decided similarly to DIMD mode.

In examples, intra mode may be associated with an intra template matching.

Intra template matching prediction (IntraTMP) may copy a prediction block (e.g., the best prediction block) from the reconstructed part of a current picture or frame based on a determination that an L-shaped template associated with the prediction block matches a current template (e.g., an L-shaped template associated with a current block). For a predefined search range, an encoder may search for the most similar template to the current template in the reconstructed part of the current frame and may use the corresponding block as the prediction block. The encoder may signal the use of IntraTMP, and a decoder may perform the same (e.g., similar) operations as those performed by the encoder.

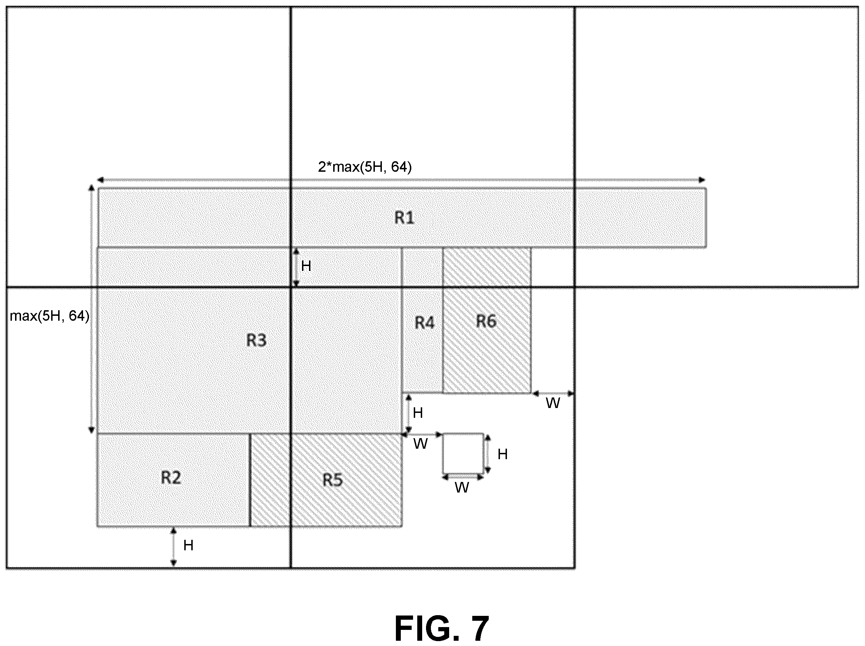

With the IntraTMP, a prediction signal may be generated by matching the L-shaped, top-only, or left-only causal neighbor of the current block with another block in a predefined search area, as depicted in FIG. 7. FIG. 7 illustrates an example of IntraTMP search area. As illustrated in FIG. 7, multiple (e.g., 6) predefined search areas may be used for an IntraTMP search, such as, for example, R1 to R6 in FIG. 7, which may include reconstructed samples from the top and left CTUs as well as part of the reconstructed samples within the current CTU that may be located in the above, left, bottom-left, and top-right neighboring areas of the current block.

A sum of absolute differences (SAD) may be used as a cost function for an IntraTMP search. The predefined search areas may be searched in a certain order, such as, for example, in the order of R4, R5, R6, R1, R2, and R3 shown in FIG. 7. Within each search area or region, a decoder may construct a candidate list of (e.g., up to 19) template matching block vectors (BVs), which may be ranked in an ascending order according to template costs (e.g., SAD). One or more of the following modes may be supported. In a single predictor mode, a single predictor may be selected from the candidate list. In a fusion of multiple predictors mode, multiple predictors may be blended to derive a final prediction block. The blending may be performed based on weights that may be computed from the template matching cost of each predictor, using a Wiener-filter based weight derivation method, etc. In a sub-pel precision mode, if a single predictor is used, sub-pel precision (e.g., 1/2-pel precision, 1/4-pel precision, and/or 3/4-pel precision) may be used, each with multiple (e.g., 8) possible directions. In a linear filter model, a linear filter may be learned between a reference template and the current template and applied to the reference block. In examples, the linear filter model mode may be used for a single predictor (e.g., if sub-pel precision is not used).

The dimensions of each search region (SearchRange_w, SearchRange_h) may be set proportional to the block dimension (BlkW, BlkH) to have a fixed number of SAD comparisons per pixel. This may be illustrated by the following formula:

$$SearchRange\_w = min(64, a * BlkW)$$

$$SearchRange\_h = min(64, a * BlkH)$$

where "a" may be a constant used to control a gain/complexity trade-off. In examples, "a" may be set equal to 5.

Within IntraTMP, the search range of one or more (e.g., all) search regions may be subsampled (e.g., by a factor of 3), for example, to speed up the template matching process. After finding a match (e.g., a best match) based on the sub-sampling (e.g., via a sparse search), a refinement process may be performed, for example, via a second template matching search around the match within a reduced range.

IntraTMP may be enabled for CUs with a size less than or equal to 64 pixels in width and height. The maximum CU size that qualifies for IntraTMP may be configurable. The use of IntraTMP may be signaled (e.g., at the CU level), for example, via a dedicated flag (e.g., if DIMD is not used for a current CU).

One or more block vectors (BVs) derived via IntraTMP may be used for an intra block copy (IBC) mode. For example, one or more stored IntraTMP BVs (e.g., derived based on neighboring blocks of a current block) along with one or more IBC BVs may be used as spatial BV candidates to construct an IBC BV candidate list, and a current IBC block may be coded based on the IBC BV candidate list, as illustrated in FIG. 7. The IntraTMP block vectors may be stored (e.g., in quarter-pel resolution) in an IBC block vector buffer. The IntraTMP block vectors may be used for IBC and/or history-based motion vector prediction (HMVP).

In examples, intra mode may be associated with an EIP.

An extrapolation filter-based intra prediction mode (EIP) may be used to code a video block. The EIP may involve one or more of the following operations. Extrapolation filter coefficients may be derived from a neighboring reconstructed area of a current block or inherited from a previous EIP block. An extrapolation may be used to generate predicted signals from the top-left corner to the bottom-right corner within the current block. An intra prediction angle may be derived by analyzing the gradient of the predicted block, and a corresponding intra-mode may be used to select a multiple transform selection (MTS), numerical stochastic perturbation theory (NSPT), or low-frequency non-separable transform (LFNST) kernel for transformation.

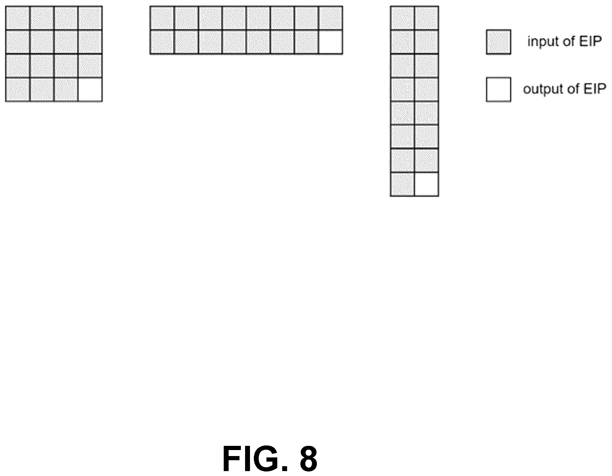

The application of EIP may be restricted to blocks with a size not greater than 32x32 and/or to the luma component only. FIG. 8 illustrates examples of EIP filter shapes that may be used. As illustrated in FIG. 8, three exemplary filter shapes with fifteen inputs and one output may be configured. EIP filter coefficients for a current CU may be derived based on neighboring reconstructed pixels of the current CU and/or inherited from previously decoded blocks.

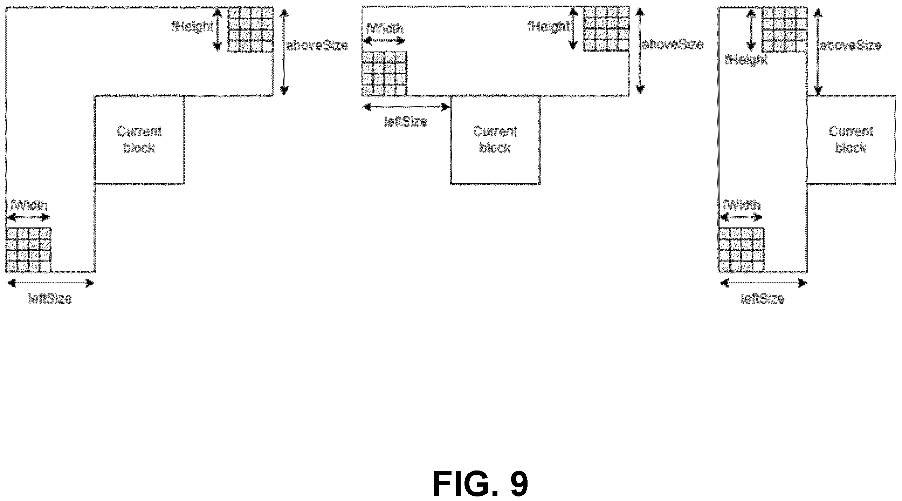

In examples, a decoder may decode relevant syntax elements to determine the type of a selected reconstructed area and the filter shape for a current block. FIG. 9 illustrates example types of reconstructed areas that may be used for EIP. An EIP selected filter may be applied by moving the filter in a selected reconstructed area horizontally or vertically with a certain step (e.g., a one-pixel step) to construct an autocorrelation matrix and/or a cross-correlation vector. EIP filter coefficients may be determined from the autocorrelation matrix and/or the cross-correlation vector.

The size of a reconstructed area may depend on the min(blockWidth, blockHeight) and a selected filter shape. For example, when the current block is an 8x16 block and the selected filter shape is 4x4, the aboveSize of a reconstructed area may be equal to min(8, 16) + 4 -1 = 11, and the leftSize of the reconstructed area may be equal to min(8, 16) +4 -1 = 11.

EIP filters may be inherited. An EIP merge mode may be applied. Filter shapes and filter coefficients may be inherited from the previous decoded blocks with EIP or an EIP merge mode. A decoder may decode an EIP merge indication (e.g., flag) to decide whether a proposed merge mode is used when the current block uses the EIP mode. The decoder may decode a merge index if the EIP merge flag is true. An EIP merge list may include spatial adjacent and non-adjacent candidates, temporal candidates, and/or history candidates. The EIP merge list may include multiple (e.g., up to 12) candidates. The size of the EIP merge list may be reduced (e.g., 6 or fewer candidates) via a reordering process, which may be performed based on the SAD cost measured on a 1-column and 1-row template. In the SAD calculation, predictions of the template area by EIP filters may be generated from (e.g., only from) reconstructed samples (e.g., neighboring and template samples). This may allow the EIP filters to be applied in parallel rather than sequentially.

EIP may be performed based on spatial adjacent candidates, temporal candidates, non-adjacent candidates, shifted temporal candidates, and/or historical candidates. The positions and/or inclusion order of these candidates may be determined.

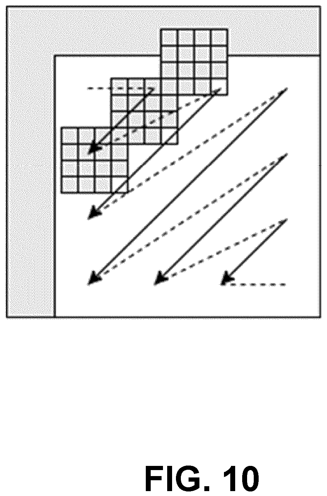

FIG. 10 illustrates an example of using EIP to generate prediction values for a current block from the top-left position to the bottom-right position by a diagonal prediction order. The calculation of the prediction values may be performed based on the following:

$$pred_{(x,y)} = \sum_{i=0}^{14} \left( c_i \times t_{(x-offsetX_i, y-offsetY_i)} \right)$$

where $pred_{(x,y)}$ may represent the predicted value at (x, y) of the current block, $c_i$ may represent the $i^{th}$ coefficient of a selected EIP filter, the index of the coefficients may be from 0 to 14, $t_{(x-offsetX_i, y-offsetY_i)}$ may represent a reconstructed or a predicted value used for the current position's prediction, and $offsetX_i$ and $offsetY_i$ may represent the position offsets to the current position.

In examples, intra mode may be associated with SGPM.

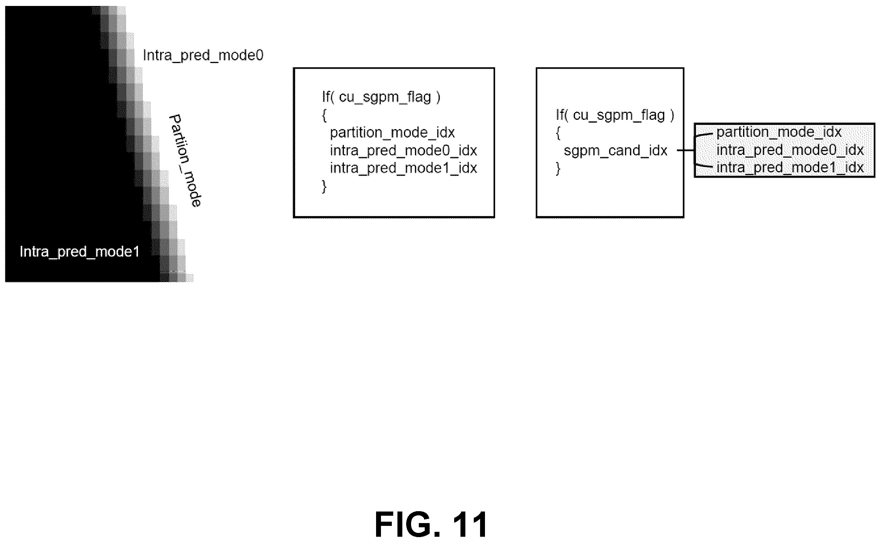

SGPM may be used to predict a coding block. SGPM may be considered an intra mode and may resemble the inter coding tool(s) of a geometric partitioning mode (GPM). The two prediction parts may be generated from an intra predicted process. In SGPM, a candidate list may be built with each entry containing a partition split and two intra prediction modes, as illustrated in FIG. 11. FIG. 11 illustrates examples of spatial GMP) candidates. One or more (e.g., 26) partition modes and one or more (e.g., three) intra prediction modes may be used to form the combinations. The length of the candidate list may be set to 16. The selected candidate index may be signaled.

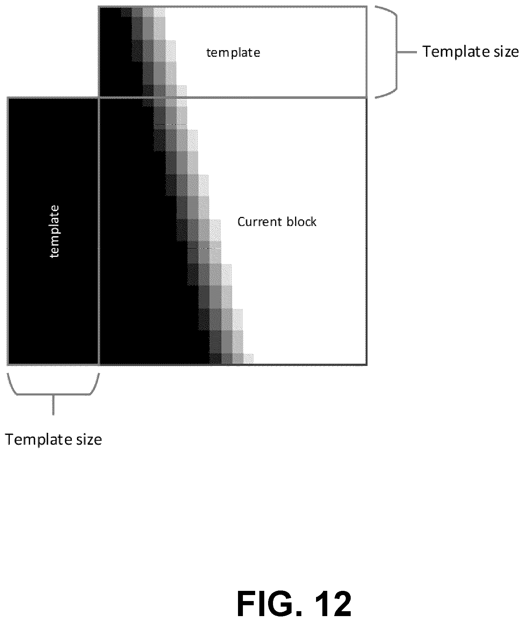

FIG. 12 illustrates an example of GPM template. For example, FIG. 12 may show an example SGPM template that may be used to reorder an SGPM candidates list. The SAD between the prediction and reconstruction of the template may be used for ordering the candidates. The template size may be fixed to one.

For a partition mode (e.g., each partition mode), an IPM list may be derived (e.g., including a TIMD-derived mode, horizontal mode, and vertical mode). The IPM list size may be set to three. In the list, a TIMD-derived mode may be replaced by one or more (e.g., two) derived modes with horizontal and vertical orientations.

The SGPM mode may be applied with a restricted block size (e.g., $4 \leq width \leq 64$ and $4 \leq height \leq 64$, where $width < height * 8$, $height < width * 8$, and $width * height \geq 32$.

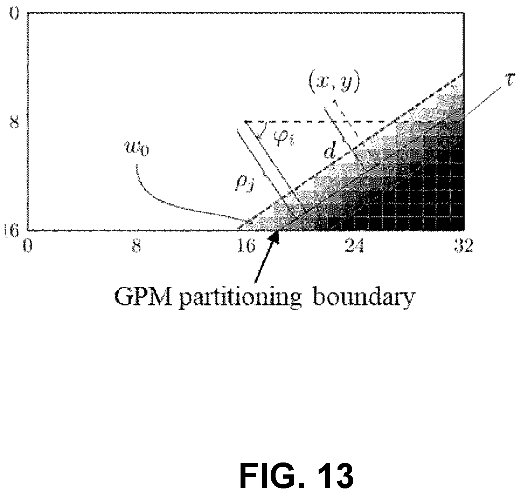

A Picture Parameter Set (PPS) flag may be coded to indicate whether no blending of two intra predictions is allowed. If this PPS flag is set to false, the following adaptive blending may be used for spatial GPM. FIG. 13 illustrates examples of GPM blending. Blending depth $\tau$ shown in FIG. 13 may be derived as follows:

```
If min(width, height)==4, 1/2 τ may be selected
                    else if min(width, height)==8, τ may be selected
                    else if min(width, height)==16, 2 τ may be selected
                    else if min(width, height)==32, 4 τ may be selected
                    else, 8 τ may be selected.
```

If the PPS flag is set to true, 1/4 $\tau$ may be used for spatial GPM coded blocks such that no blending may be used if an SGPM block has a partition angle completely horizontal or vertical, and/or if a much narrower blending width is used when the SGPM block has other partition angles. The PPS flag may be set to true for screen content coding.

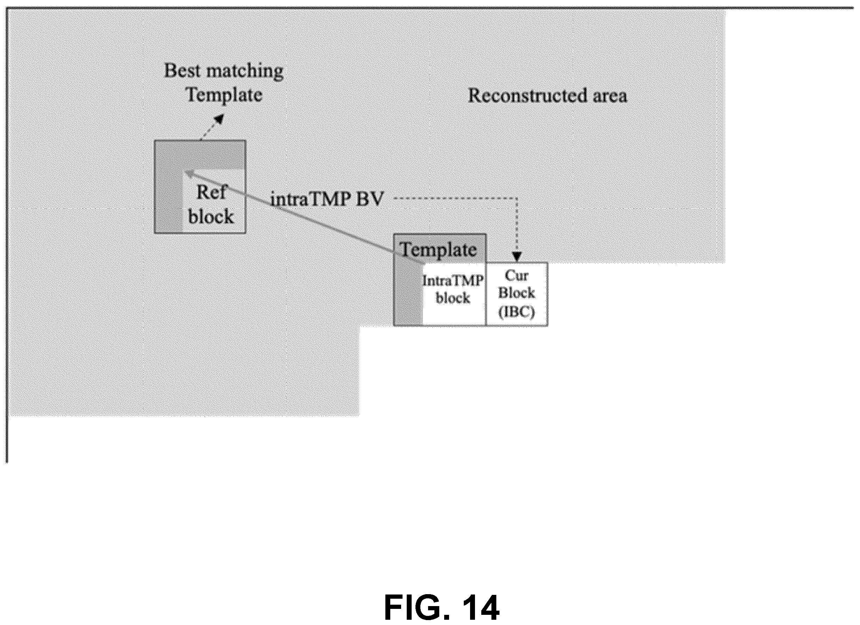

One or more IntraTMP block vectors (BVs) may be added to an IBC block vector candidate list as spatial candidates. The IntraTMP block vectors may be stored in quarter-pel resolution for coding of IBC block vectors and/or history-based motion vector prediction (HMVP). FIG. 14 illustrates an example of using an IntraTMP block vector for an IBC block.

In examples, intra mode may be associated with TIMD.

A video encoding (e.g., an encoder) and/or a video decoding device (e.g., a decoder) may perform TIMD. With TIMD, a difference such as a sum of absolute transform differences (SATD) between the prediction and reconstruction samples of a template may be calculated, for example, for one or more intra prediction modes in MPMs (e.g., for each intra prediction mode in the MPMs) and/or one or more wide-angle modes (e.g., if above-right and/or bottom-left reference samples are available). A number of (e.g., the first two) intra prediction modes with the minimum SATD may be selected as the TIMD modes. These TIMD modes may be fused (e.g., based on a weighted average and/or after applying a position dependent intra prediction combination (PDPC)), and an intra prediction resulted from the fusion (e.g., a weighted intra prediction) may be used to code a current CU. A PDPC may be performed to derive the TIMD modes.

Related to the operations described above, the costs of selected modes (e.g., two selected modes) may be compared with a threshold value. A cost factor (e.g., having a value of 2) may be applied to determine if the following condition is true:

$$costMode2 < 2*costMode1$$

If this condition is true, the fusion may be applied; otherwise, one of the selected modes (e.g., only mode 1) may be used. The weights associated with the selected modes may be computed based on their respective SATD costs, for example, as follows:

$$weight1 = costMode2 \ / \ (costMode1 + costMode2)$$

$$weight2 = 1 - weight1$$

In examples, intra mode may be associated with MDIP.

For example, a video encoding (e.g., an encoder) and/or a video decoding device (e.g., a decoder) may derive 8 intra prediction modes based on a HoG from neighboring templates. The HoG computation may be similar (e.g., the same as) the process described in DIMD, but the template area may differ. If the block size is less than 256, a 3-line template area may be used. Otherwise (e.g., if the block size is greater than 256), the template area may be extended to 4 lines. For example, the 8 intra prediction modes may be obtained (e.g., derived) by the HoG based on predefined template areas as follows:

4 intra prediction modes may be derived from above and left template area;
2 intra prediction modes may be derived from left template area;
2 intra prediction modes may be derived from above template area;
During the above processes, duplicate intra prediction modes may be excluded. One or more neighboring modes may be added, e.g., until 8 intra prediction modes are identified.

After constructing 8 intra prediction modes, the intra prediction modes may be ordered by computing their template cost. The intra prediction mode with the minimum template cost may be designated as the MDIP mode. The intra prediction mode with the minimum template cost may be signaled (e.g., signaled before) MPM information at a (e.g., each) coding unit (CU) level. The above ordering process may utilize the left and top 1-line segments of the current block as the template area. To avoid redundancy, the MDIP mode may be excluded from MPM, secondary MPM, and/or non-MPM. To further reduce signaling overhead, after computing the HoG, 16 improbable intra modes with small HoG amplitude may be removed from MPM, SMPM, and/or non-MPM list.

Feature(s) associated with intra MTS are provided herein. In a coding tool, discrete sine transform type 7 (DST7) and discrete cosine transform type 8 (DCT8) transform kernels may be used, e.g., in addition to DCT2. The kernels may be used for intra coding and/or inter coding. Transform skip may be used.

In a coding tool, one or more additional primary transforms, e.g., DCT5, DST4, DST1, and/or identity transform (IDT), may be employed. One or more MTS sets may be made dependent on a transform unit (TU) size and/or intra mode information. For blocks predicted using IntraTMP, a DIMD procedure may be used on a prediction block, e.g., to derive an intra mode that is used for a transform selection. For example, a horizontal gradient and/or a vertical gradient may be calculated for a predicted sample, e.g., to build a HoG. The intra prediction mode with one or more histogram amplitude values (e.g., the largest histogram amplitude values) may be used to determine the MTS transform set.

One or more (e.g., 16) different TU sizes may be considered. For a TU size, five different classes may be considered, e.g., depending on intra mode information. For a class, one, four, and/or six different transform pairs may be considered. The number of intra MTS candidates may be adaptively selected (e.g., between the one, four, and/or six MTS candidates). For example, the number of intra MTS candidates may be adaptively selected between the one, four, and/or six MTS candidates depending on the sum of the absolute value of transform coefficients. The sum may be compared against thresholds (e.g., two fixed thresholds) to determine the total number of allowed MTS candidates as described herein:

> 1 candidate: sum <= th0
> 4 candidates: th0 < sum <= th1
> 6 candidates: sum > th1

A total of 80 (e.g., 16 transform sizes times 5 classes) different classes may be considered. One or more of the different classes may share the same transform set. For example, in a video coding device, 58 (e.g., less than 80) unique entries may exist in the resultant look-up table (LUT).

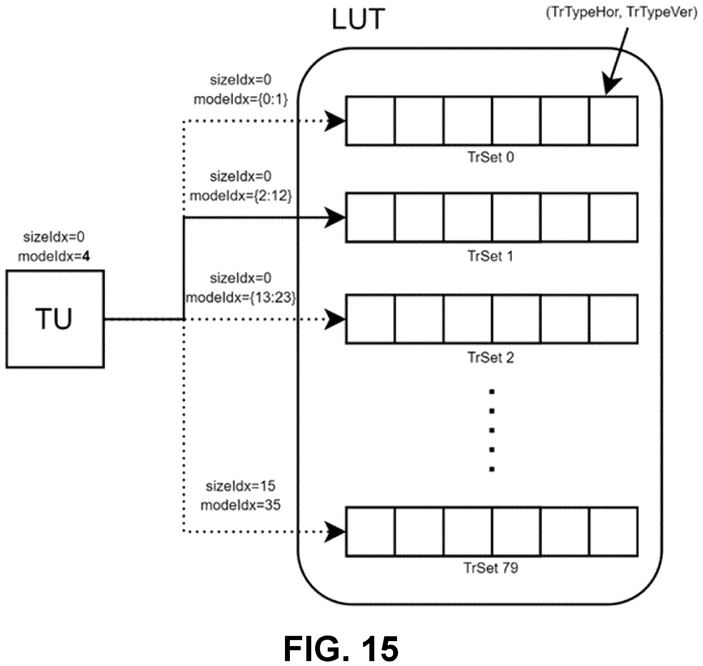

FIG. 15 illustrates an example of an explicit MTS set selection (e.g., modeIdx=4 and sizeIdx=0). For angular modes, a joint symmetry over a TU shape and intra prediction may be considered. A mode i (e.g., i > 34) with a TU shape A×B may be mapped. For example, a mode i (e.g., i > 34) with a TU shape A×B may be mapped to the same class corresponding to the mode j = (68 - i) with a TU shape B×A. For a transform pair, the order of the horizontal transform kernel and the vertical transform kernel may be swapped. For example, a 16x4 block with mode 18 (e.g., horizontal prediction) and a 4x16 block with mode 50 (e.g., vertical prediction) may be mapped to the same class. The vertical and horizontal transform kernels may be swapped. For the wide-angle modes, an angular mode (e.g., the nearest angular mode) may be used for the transform set determination. For example, mode 2 may be used for one or more (e.g., all) of the modes between -2 and -14. Mode 66 may be used for mode 67 to mode 80. A dedicated mode index may be assigned to a matrix-based intra prediction (MIP), e.g., resulting in a total of 36 possible mode entries in the LUT. An example of transform set selection in the LUT for a given TU size and intra mode may be illustrated in FIG. 15.

IDT may be applied for one or more blocks that are 16x16 or smaller and/or may have intra modes within a range around horizontal and/or vertical intra directions (e.g., the proximity of horizontal and/or vertical intra directions). The proximity may be defined by a threshold that depends on the block size. For example, if the transform index is equal to 3 and a block is 16x16 or smaller and has intra modes within the proximity of horizontal and/or vertical intra directions, the horizontal and/or vertical identity transform may be applied.

Technique(s) described herein may be used for LFNST. The LFNST design may be extended as follows. The number of LFNST sets (S) and candidates (C) in a set may be extended to S=35 and C=3, and the LFNST set (IfnstTrSetIdx) for a given intra mode (predModeIntra) may be derived according to the following formula:

```
        For predModeIntra < 0, IfnstTrSetIdx may be equal to 2
           IfnstTrSetIdx = predModeIntra, for predModeIntra in [0,34]
     IfnstTrSetIdx = 68 - predModeIntra, for predModeIntra in [35,66]
```

Three different kernels, LFNST4, LFNST8, and LFNST16, may be defined to indicate LFNST kernel sets and may be applied to 4xN/Nx4 (N≥4), 8xN/Nx8 (N≥8), and MxN (M, N≥16), respectively.

The kernel dimensions may be specified by:
(LFSNT4, LFNST8*, LFNST16*) = (16x16, 32x64, 32x96)

The forward LFNST may be applied to the top-left low frequency region, which may be called region-of-interest (ROI). When LFNST is applied, primary-transformed coefficients that exist in the region other than ROI may be zeroed out.

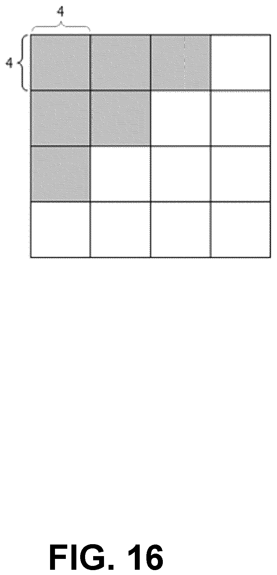

FIG. 16 shows an example ROI for LFNST16. As shown in FIG. 16, the ROI may comprise six 4x4 sub-blocks, which may be consecutive in scan order. Since the number of input samples may be 96, a transform matrix for forward LFNST16 may be Rx96. For example, R may be chosen to be 32 and 32 coefficients (e.g., two 4x4 sub-blocks) may be generated from forward LFNST16. The 32 coefficients may be placed following coefficient scan order.

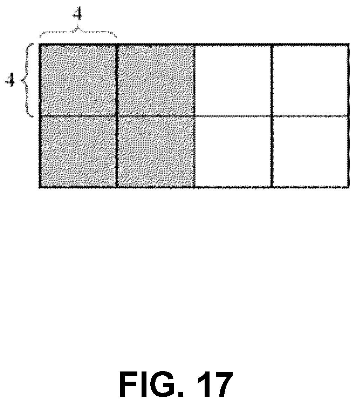

FIG. 17 shows an example ROI for LFNST8. The forward LFNST8 matrix may be Rx64, and R may be chosen to be 32. The generated coefficients may be located in the same manner as with LFNST16.

The mapping from intra prediction modes to these sets may be shown in Table 1.

Table 1. Example mapping of intra prediction modes to LFNST set index

| Intra pred. mode | -14 | -13 | -12 | -11 | -10 | -9 | -8 | -7 | -6 | -5 | -4 | -3 | -2 | -1 | 0 | 1 |
|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 |
| Intra pred. mode | 2 | 3 | 4 | 5 | 6 | 7 | 8 | 9 | 10 | 11 | 12 | 13 | 14 | 15 | 16 | 17 |
| LFNST set index | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 |
| LFNST set index | 18 | 19 | 20 | 21 | 22 | 23 | 24 | 25 | 26 | 27 | 28 | 29 | 30 | 31 | 32 | 33 |
| Intra pred. mode | 34 | 35 | 36 | 37 | 38 | 39 | 40 | 41 | 42 | 43 | 44 | 45 | 46 | 47 | 48 | 49 |
| LFNST set index | 34 | 35 | 36 | 37 | 38 | 39 | 40 | 41 | 42 | 43 | 44 | 45 | 46 | 47 | 48 | 49 |
| Intra pred. mode | 50 | 51 | 52 | 53 | 54 | 55 | 56 | 57 | 58 | 59 | 60 | 61 | 62 | 63 | 64 | 65 |
| LFNST set index | 18 | 17 | 16 | 15 | 14 | 13 | 12 | 11 | 10 | 9 | 8 | 7 | 6 | 5 | 4 | 3 |
| Intra pred. mode | 66 | 67 | 68 | 69 | 70 | 71 | 72 | 73 | 74 | 75 | 76 | 77 | 78 | 79 | 80 | |
| LFNST set index | 2 | 2 | 2 | 2 | 2 | 2 | 2 | 2 | 2 | 2 | 2 | 2 | 2 | 2 | 2 | |

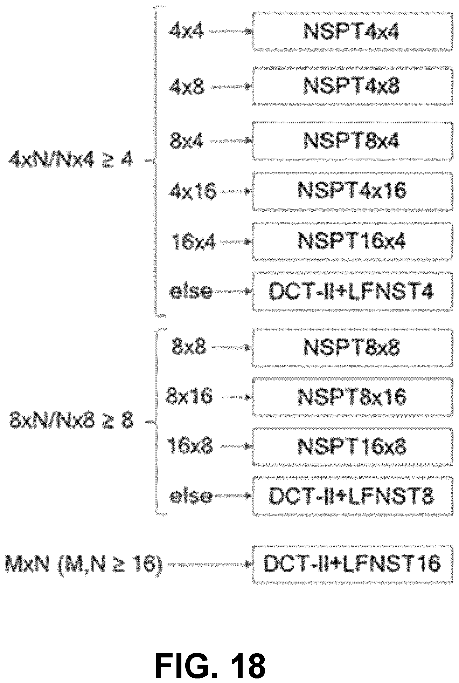

Non-Separable Primary Transform (NSPT) may be designed to replace the two stages of transform (e.g., DCT2-LFNST) with a single non-separable transform. FIG. 18 shows an example of block sizes for which NSPT may be applied, where LFNST may be applied for the rest. As shown in FIG. 18, NSPT may be allowed (e.g., only allowed) for small blocks.

NSPTs may comprise 35 sets with 3 candidates in a (e.g., each) set. For example, the kernels of NSPT may have the following shapes: (NSPT4x4: 16x16); (NSPT4x8/NSPT8x4: 32x20); (NSPT8x8: 64x32); (NSPT4x16/NSPT16x4: 64x24); or (NSPT8x16/NSPT16x8: 128x40). The 12, 32, 40 and 88 coefficients may be zeroed-out, for example, using (NSPT4x8/NSPT8x4), (NSPT8x8), (NSPT4x16/NSPT16x4), and (NSPT8x16/NSPT16x8), respectively.

A LFNST/NSPT transform set (e.g., new LFNST/NSPT transform sets) may be added for intra special modes inter. A first LFNST/NSPT set may be applied for blocks using TIMD, DIMD, EIP, MIP or SGPM. The second LFNST/NSPT set may be applied for blocks using IntraTMP and inter CUs.

Multiple transform set selection (MTSS) may be performed for LFNST/NSPT. The LFNST/NSPT transform set may be decided (e.g., implicitly decided) by an intra prediction mode (IPM). For a block coded with PLANAR, DC, or directional modes, the IPM may, for example, be set as the intra prediction mode itself. For a DIMD coded block, the IPM may, for example, be set as the best mode derived by the DIMD process with neighboring reconstructed pixels. For a TIMD coded block, the IPM may, for example, be set as the best mode derived by the TIMD process. For a MIP or an intra template matching prediction (ITMP) coded block, the IPM may, for example, be set as the best mode derived by the DIMD process with the prediction. For an SGPM coded block, the IPM may, for example, be set as the mode corresponding to the split mode of SGPM.

The prediction strategies of DIMD, TIMD, SGPM, MIP, EIP and/or ITMP may be different from normal intra prediction modes like PLANAR, DC, and directional modes. DIMD, TIMD, SGPM and ITMP may allow a combination of multiple predictions. MIP may make a prediction using matrix calculation. ITMP may reference the reconstructed region in the current picture. The prediction residual may illustrate different feature(s) from the derived IPM.

MTSS may allow CUs coded with DIMD, TIMD, MIP, EIP, SGPM and/or ITMP to select one LFNST/NSPT transform set out of a plurality (e.g., two) candidate sets. If the current block is coded with DIMD, TIMD, MIP, EIP, SGPM, or ITMP and LFNST/NSPT is used, a (e.g., one more) bin (e.g., a flag such as mtssFlsg) may be employed to indicate whether the first candidate transform set or the second candidate transform set is selected. The decoder process may be described in FIG. 18 for modes relying on the HoG to compute their VIPMs. The first candidate transform set may remain (e.g., the same as in a current version of ECM). The second candidate transform set may be derived by the DIMD process with neighboring reconstructed pixels. If a TIMD coded block applies fusion, the second TIMD IPM may be considered first to derive the second candidate set. For a SGPM coded block, the two IPMs that SGPM uses may be considered first to derive the second candidate set. The difference between the first and second IPM may be larger than 4 (e.g., to maintain the diversity).

One or more of the following VIPMs (e.g., as shown in Table 2) may be considered for special intra modes:

Table 2: VIPM1 and VIPM2 derivation strategies

|  | VIPM1 | VIPM2 |
|---|---|---|
| DIMD, OBIC, TIMD | The 1st IPM used in current mode | The 2nd IPM used in current mode |
| SGPM, MIP, EIP, ITMP | The 1st IPM derived by HoG of prediction | The 2nd IPM derived by HoG of prediction |

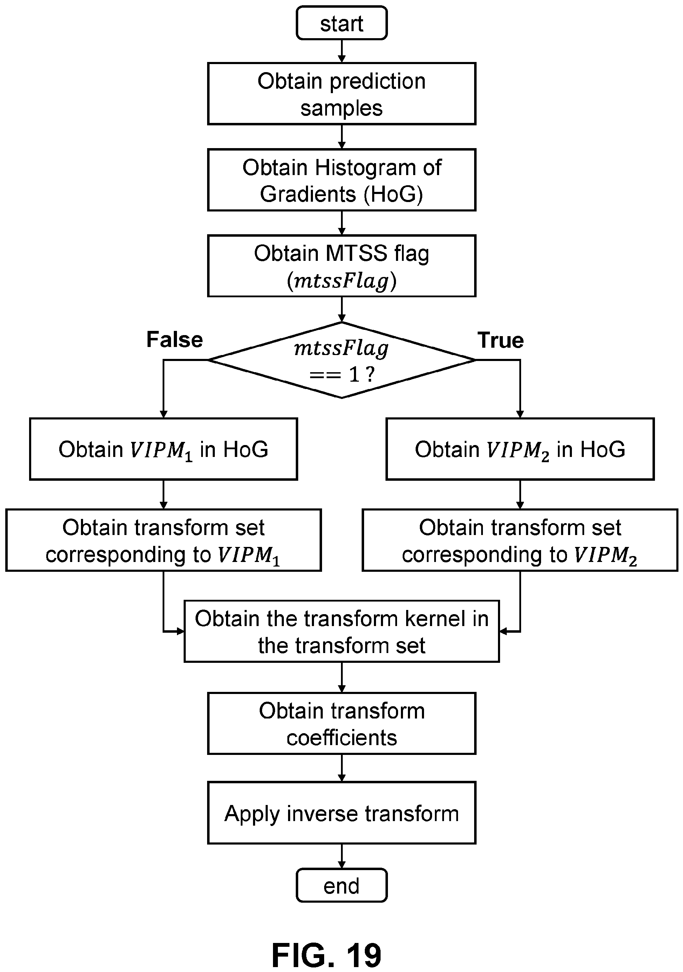

FIG. 19 illustrates an example decoder process of MTSS. As shown in FIG. 19, transform coefficients may be obtained. As shown in FIG. 19, an MTSS indication (e.g., flag, such as, for example, mtssFlag) may be obtained. As shown in FIG. 19, a HoG may be obtained. As shown in FIG. 19, whether the MTSS flag is set to 1 may be determined. Based on a determination that the MTSS indication is not set to one, VIPM1 may be obtained in the HoG. An angular mode transform set may be obtained, for example, corresponding to VIPM1. Based on a determination that the MTSS indication is set to one, VIPM2 may be obtained in the HoG. The angular mode transform set may be obtained, for example, corresponding to VIPM2. A transform kernel may be obtained. Inverse transform may be applied

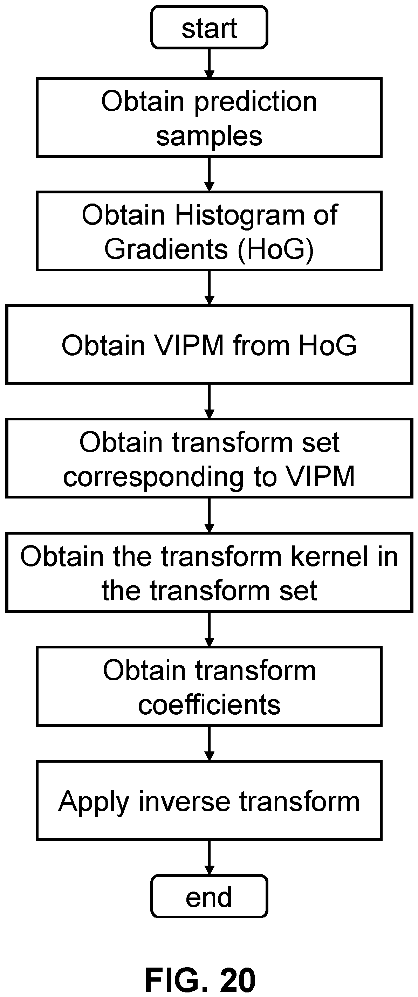

In examples, a device may perform template-based transform set selection. For example, special modes may use (e.g., generally use) the first intra mode in the HoG, e.g., the intra direction associated with the highest gradient intensity, as VIPM to derive their transform set in the LFNST/NSPT or MTS LUT. The decoder side of the process may be described herein and/or illustrated in FIG. 20. FIG. 20 illustrates an example transform set derivation process for a decoder side. As illustrated in FIG. 20, the HoG may be obtained from the prediction signal. The DIMD mode may use the reconstructed neighboring pixels (e.g., instead of the prediction signal to produce the HoG). The virtual intra prediction mode (VIPM) may be inferred (e.g., inferred directly) from the HoG by using the intra mode associated with the high (e.g., highest) gradient intensity bin.

The transform set may be inferred. For example, the transform set may be inferred after computing the VIPM. The transform kernel may be derived (e.g., implicitly or explicitly derived) from the transform set. The inverse transform may be applied to the transform coefficients.

In MDIP, one or more (e.g., several) intra modes computed from the HoG may be reordered, e.g., using template cost. The intra prediction mode with the low cost (e.g., the lowest cost) may be used to produce the prediction signal.

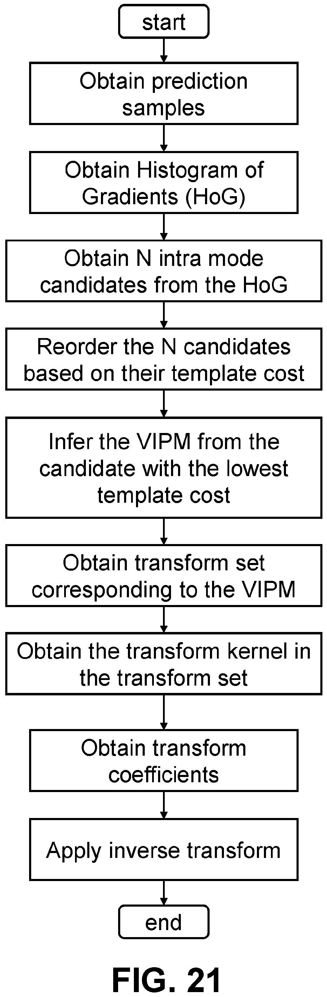

FIG. 21 illustrates an example of transform set derivation using the template cost process (e.g., for a decoder side). The example process illustrated in FIG. 21 may be used and/or configured to derive the VIPM for one or more special modes (e.g., an MIP mode, an EIP mode, an ITMP mode, a DIMD mode, a TIMD, an intraTMP mode, an inter mode, and/or the like).

As illustrated in FIG. 21, a HoG may be constructed, e.g., using one or more prediction samples of a current block. N intra mode candidates may be obtained from the HoG. The N intra mode candidates may be tested on the template of the current block and reordered using the template cost. The VIPM may be inferred as the intra mode with the low template cost (e.g., the lowest template cost) from the reordered list of N intra mode candidates. The transform kernel may be derived (e.g., explicitly or implicitly derived) and be used to perform the inverse transform on the obtained transform coefficients.

In examples, a device (e.g., a video decoding device and/or a video encoding device) may include one or more processors. The one or more processors may be configured to perform one or more of the following.

As described herein and as illustrated in FIG. 21, a device may obtain at least one prediction sample associated with a current block. As described herein, the device may obtain (e.g., also obtain) at least one neighboring reconstructed sample that is associated with the current block. Based on at least one prediction sample and/or at least one neighboring reconstructed sample, the device may obtain a HoG.

The device may determine whether to perform a template cost analysis. In examples as described herein, the device may determine that the HoG shows a strong directionality. Based on the determination that the HoG does not show the strong directionality, the device may perform the template cost analysis. Based on the determination that the HoG shows the strong directionality, the device may skip performing the template cost analysis.

In examples, the device may determine that at least one special intra mode is enabled. At least one special intra mode may be, or may include, at least one of an MIP mode, an EIP mode, an ITMP mode, a DIMD mode, a TIMD, an IBC mode, or an inter mode. Based on the determination that at least one special intra mode is enabled, the device may perform the template cost analysis. Based on the determination that the special intra mode is disabled, the device may skip performing the template cost analysis.

Based on a determination to perform the template cost analysis, the device may obtain at least one intra mode candidate based on the HoG. As described herein and as illustrated in FIG. 21, the device may determine a respective template cost associated with at least one intra mode candidate. The device may reorder at least one intra mode candidate based on the respective template cost.

Based on at least one intra mode candidate, the device may obtain a (e.g., at least one) VIPM. For example, the video device may determine an intra mode candidate with the lowest template cost (e.g., from the reordered at least one intra mode candidate). The device may obtain the VIPM based on the intra mode candidate with the lowest template cost.

Based on the VIPM, the device may obtain a transform set. Based on the transform set, the device may obtain a transform kernel. The device may perform an inverse transform.

In examples, the device (e.g., the video decoding device) may decode the current block based on the transform kernel. For example, the video decoding device may obtain one or more transform coefficients. The video decoding device may perform an inverse transform of the transform coefficients using the transform kernel to decode the current block.

In examples, the device (e.g., the video encoding device) may encode the current block based on the transform kernel. For example, the video encoding device may obtain one or more transform coefficients. The video encoding device may perform a transform of one or more residual coefficients using the transform kernel to encode the current block.

In some examples, the example template cost analysis described herein (e.g., and also illustrated in FIG. 21) may be enabled for one or more (e.g., some) modes only. The enablement of the example template cost analysis described herein may only be applied to special intra modes (e.g., MIP, EIP, ITMP, DIMD, TIMD, and/or the like), IBC mode, or inter modes (e.g., regular inter mode or SBT, and/or the like) that rely on a VIPM, e.g., to infer their LFNST/NSPT transform set.

In some examples, one or more neighboring reconstructed samples may be used to produce the HoG. In examples, the use of one or more neighboring reconstructed samples to produce the HoG may be mode dependent. For example, some special modes may use the prediction signal to produce the HoG, while other modes may use the reconstructed neighboring samples to produce the HoG.

In other examples, intra modes from both the HoG computed on reconstructed neighboring samples and the HoG computed on the prediction signal may be considered in the template cost analysis. In this example, non-redundant modes (e.g., only non-redundant modes) may be considered in the template cost analysis.

In other examples, if the HoG is constructed from the neighboring reconstructed samples, a different fixed number of candidates may be obtained from the HoG computed on the left, top, and top-left template area. For example, N, M, and L candidates may be considered from the HoG computed on the left, top, and top-left template areas, respectively.

In other examples, the planar and/or DC modes may be included in the template cost analysis. In other examples, planar and/or DC modes may be considered in the template cost analysis, e.g., under certain conditions. For example, planar and/or DC may be added to the list of candidates to be tested on the template if the HoG does not reflect high directionality, e.g., the highest gradient bin is under a certain threshold or the two first bin intra prediction modes are far from each other, or depending on the special mode, e.g., the planar mode may be added in the candidate list for the DIMD mode.

Some mode-specific interactions may be considered, e.g., to populate the list of candidates to be tested on the template.

For OBIC, the intra modes obtained from the histogram of occurrence (HoC) may be added to the list of intra modes to be tested on the template, e.g., if they are not redundant. For example, a fixed number of C modes from the HoC may be considered in the template cost analysis, e.g., in addition to the N modes from the HoG.

For TIMD, the first and second TIMD modes may be added to the template candidates, e.g., in addition to the HoG candidates, if they are not redundant.

For SGPM and/or regression-based SGPM, the two intra modes may be added to the template candidates, e.g., in addition to the HoG candidates, if they are not redundant. For SGPM (e.g., regular SGPM), the intra mode associated with the split direction may be added to the list of template candidates if not redundant.

In examples, a device may perform adaptive template-based transform set selection.

The template-based VIPM derivation process may be adaptive (e.g., to reduce the complexity). The example described herein may need to (e.g., require) perform a template cost analysis on the encoder and/or the decoder side. To reduce the complexity, the template-based VIPM derivation process may be adaptive. For example, if the HoG is showing a strong directionality, e.g., the highest gradient intensity or the cumulative gradient intensity in the HoG is over a certain threshold or the two first intra prediction mode bins in the HoG are close to each other, the VIPM may be inferred (e.g., directly inferred) from the HoG. Otherwise, the example of transform set derivation using the template cost analysis described herein (e.g., as illustrated in FIG. 21) may be used to derive the VIPM. The reverse logic may be considered. For example, the template analysis described herein may be performed if (e.g., only if) the HoG is showing a strong directionality.

For example, as described herein, the device (e.g., the video encoding device and/or the video decoding device) may determine whether to perform a template cost analysis based on a determination that the HoG shows a strong directionality. Based on the determination that the HoG does not show the strong directionality, the device may perform the template cost analysis. Based on the determination that the HoG shows the strong directionality, the device may skip performing the template cost analysis.

In other examples, the number of candidates to be tested in the template analysis may be determined based on whether the HoG is showing a strong directionality or not. For example, N candidates may be considered if the high gradient intensity (e.g., the highest gradient intensity) or the cumulative gradient intensity in the HoG is over a certain threshold. M candidates may be considered otherwise. A LUT may be used to associate different numbers of candidates with the gradient intensity value or the cumulative gradient intensity value in the HoG.

In other examples, the number of candidates may be based on (e.g., dependent on) the mode. For example, the example described herein (e.g., adaptative template-based transform set selection) may be disabled for some special modes.

In other examples, the template analysis may be performed on a subsampled version of the template, e.g., to reduce the complexity.

In other examples, the template analysis may be enabled (e.g., may only be enabled) for some block sizes, e.g., enabled (e.g., only enabled) for a block containing more or less than P pixels.

In other examples, the number of candidates considered in the template analysis may be based on (e.g., dependent on) the size of the block. For example, N candidates may be considered for a block with more or equal to P pixels. M candidates may be considered for blocks with less than P pixels. A LUT may be used to associate different numbers of candidates with the number of pixels P in the block.

In examples, a device may perform template-based transform set selection in MTSS.

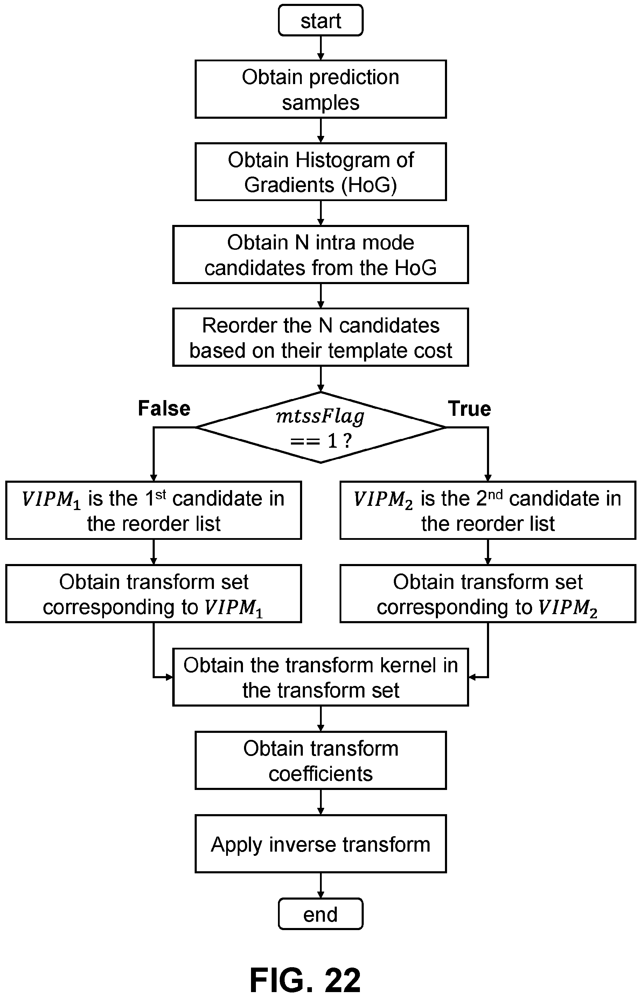

For example, the template-based VIPM derivation example described herein may be associated with (e.g., be configured in) the context of MTSS. In MTSS, the first and second VIPMs, denoted as VIPM1 and VIPM2, respectively, may be selected (e.g., selected directly) from the HoG. In the example described herein, the first and second VIPMs (e.g., VIPM1 and VIPM2, respectively) may be selected from a template cost analysis. FIG. 22 illustrates an example transform set derivation using template cost for the MTSS process (e.g., for a decoder side).

In some examples, one or more examples (e.g., that are associated with template-based transform set selection and/or adaptative template-based transform set selection) may apply to the template-based transform set selection in MTSS described herein.

In other examples, the VIPM1 may be computed (e.g., based on a HoG to infer a transform set in an intra MTS/LFNST/NSPT LUT), and the VIPM2 is computed from the template analysis described herein (e.g., transform set selection in MTSS). If the VIPM2 is redundant with the VIPM1, the second intra prediction mode in the reordered list from the template cost analysis may be used as VIPM2.

In other examples, MTSS may be applied to an MDIP mode, e.g., using the transform set selection in MTSS described herein.

The following may be a non-exhaustive list of embodiments that may or may not be claimed.

Systems, methods, and instrumentalities are disclosed for transform set selection based on template cost analysis.

In examples, a video decoding device may include one or more processors. The one or more processors may be configured to perform one or more of the following.

The video decoding device may obtain at least one prediction sample associated with a current block. The video decoding device may obtain (e.g., also obtain) at least one neighboring reconstructed sample that is associated with the current block. Based on at least one prediction sample and/or at least one neighboring reconstructed sample, the video decoding device may obtain a histogram of gradient (HoG).

The video decoding device may determine whether to perform a template cost analysis. In examples, the video decoding device may determine that the HoG shows a strong directionality. Based on the determination that the HoG does not show the strong directionality, the video decoding device may perform the template cost analysis. Based on the determination that the HoG shows the strong directionality, the video decoding device may skip performing the template cost analysis.

In examples, the video decoding device may determine that at least one special intra mode is enabled. At least one special intra mode may be, or may include, at least one of a matrix-based intra prediction (MIP) mode, an extrapolation filter-based intra prediction (EIP) mode, an intra template matching prediction (ITMP) mode, a decoder side intra mode derivation (DIMD) mode, a template-based intra mode derivation (TIMD), an intra block copy (IBC) mode, or an inter mode. Based on the determination that at least one special intra mode is enabled, the video decoding device may perform the template cost analysis. Based on the determination that the special intra mode is disabled, the video decoding device may skip performing the template cost analysis.

Based on a determination to perform the template cost analysis, the video decoding device may obtain at least one intra mode candidate based on the HoG.

The video decoding device may determine a respective template cost associated with at least one intra mode candidate. The video decoding device may reorder at least one intra mode candidate based on the respective template cost.

Based on at least one intra mode candidate, the video decoding device may obtain at least one virtual intra prediction mode (VIPM). For example, the video decoding device may determine an intra mode candidate with the lowest template cost (e.g., from the reordered at least one intra mode candidate). The video decoding device may obtain at least one VIPM based on the intra mode candidate with the lowest template cost.

Based on at least one VIPM, the video decoding device may obtain a transform set. Based on the transform set, the video decoding device may obtain a transform kernel.

The video decoding device may decode the current block based on the transform kernel. For example, the video decoding device may obtain one or more transform coefficients. The video decoding device may perform an inverse transform of the one or more transform coefficients using the transform kernel to decode the current block.

In examples, a video encoding device may include one or more processors. The one or more processors may be configured to perform one or more of the following.

The video encoding device may obtain at least one prediction sample associated with a current block. The video encoding device may obtain (e.g., also obtain) at least one neighboring reconstructed sample that is associated with the current block. Based on at least one prediction sample and/or at least one neighboring reconstructed sample, the video encoding device may obtain a HoG.

The video encoding device may determine whether to perform a template cost analysis. In examples, the video encoding device may determine that the HoG shows a strong directionality. Based on the determination that the HoG does not show the strong directionality, the video encoding device may perform the template cost analysis. Based on the determination that the HoG shows the strong directionality, the video encoding device may skip performing the template cost analysis.

In examples, the video encoding device may determine that at least one special intra mode is enabled. At least one special intra mode may be, or may include, at least one of an MIP mode, an EIP mode, an ITMP mode, a DIMD mode, a TIMD, an IBC mode, or an inter mode. Based on the determination that at least one special intra mode is enabled, the video encoding device may perform the template cost analysis. Based on the determination that the special intra mode is disabled, the video encoding device may skip performing the template cost analysis.

Based on a determination to perform the template cost analysis, the video encoding device may obtain at least one intra mode candidate based on the HoG.

The video encoding device may determine a respective template cost associated with at least one intra mode candidate. The video encoding device may reorder at least one intra mode candidate based on the respective template cost.

Based on at least one intra mode candidate, the video encoding device may obtain at least one VIPM. For example, the video encoding device may determine an intra mode candidate with the lowest template cost (e.g., from the reordered at least one intra mode candidate). The video encoding device may obtain at least one VIPM based on the intra mode candidate with the lowest template cost.

Based on at least one VIPM, the video encoding device may obtain a transform set. Based on the transform set, the video encoding device may obtain a transform kernel.

The video encoding device may encode the current block based on the transform kernel. For example, the video encoding device may obtain one or more transform coefficients. The video encoding device may perform a transform of one or more residual coefficients using the transform kernel to encode the current block.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.    A video decoding device, comprising:

a processor configured to:

obtain at least one prediction sample associated with a current block;
based on the at least one prediction sample, obtain a histogram of gradient (HoG);
determine whether to perform a template cost analysis;
based on a determination to perform the template cost analysis, obtain at least one intra mode candidate based on the HoG;
determine a respective template cost associated with the at least one intra mode candidate;
reorder the at least one intra mode candidate based on the respective template cost;
based on the at least one intra mode candidate, obtain at least one virtual intra prediction mode (VIPM);
based on the at least one VIPM, obtain a transform set;
based on the transform set, obtain a transform kernel; and
decode the current block based on the transform kernel.

2.    The video decoding device of claim 1, wherein to determine whether to perform the template cost analysis comprises the processor being configured to:

determine that the HoG shows a strong directionality;
based on the determination that the HoG does not show the strong directionality, perform the template cost analysis; and
based on the determination that the HoG shows the strong directionality, skip performing the template cost analysis.

3.    The video decoding device of claim 1 or claim 2, wherein to obtain the at least one VIPM comprises the processor being configured to:

determine an intra mode candidate with the lowest template cost; and
obtain the at least one VIPM based on the intra mode candidate with the lowest template cost.

4.    The video decoding device of any one of claims 1-3, wherein the processor is configured to:

obtain a transform coefficient; and
perform inverse transform of the transform coefficient using the transform kernel to decode the current block.

5. The video decoding device of any one of claims 1-4, wherein to determine whether to perform the template cost analysis comprises the processor being configured to:

determine that at least one special intra mode is enabled, wherein the at least one special intra mode comprises at least one of a matrix-based intra prediction (MIP) mode, an extrapolation filter-based intra prediction (EIP) mode, an intra template matching prediction (ITMP) mode, a decoder side intra mode derivation (DIMD) mode, a template-based intra mode derivation (TIMD), an intra block copy (IBC) mode or an inter mode;
based on the determination that the at least one special intra mode is enabled, perform the template cost analysis; and
based on the determination that the at least one special intra mode is disabled, skip performing the template cost analysis.

6. The video decoding device of any one of claims 1-5, wherein to obtain the HoG comprises the processor being further configured to use at least one neighboring reconstructed sample that is associated with the current block.

7. A method for video decoding device comprising:

obtaining at least one prediction sample associated with a current block;
based on the at least one prediction sample, obtaining a histogram of gradient (HoG);
determining whether to perform a template cost analysis;
based on a determination to perform the template cost analysis, obtaining at least one intra mode candidate based on the HoG;
determining a respective template cost associated with the at least one intra mode
candidate; reordering the at least one intra mode candidate based on the respective template cost;
based on the at least one intra mode candidate, obtaining at least one virtual intra prediction mode (VIPM);
based on the at least one VIPM, obtaining a transform set;
based on the transform set, obtaining a transform kernel; and
decoding the current block based on the transform kernel.

8. The method of claim 7, wherein determining whether to perform the template cost analysis comprises:

determining that the HoG shows a strong directionality;
based on the determination that the HoG does not show the strong directionality, performing the template cost analysis; and
based on the determination that the HoG shows the strong directionality, skipping the perform of the template cost analysis.

9. The method of claim 7 or claim 8, wherein obtaining the at least one VIPM comprises:

determining an intra mode candidate with the lowest template cost; and
obtaining the at least one VIPM based on the intra mode candidate with the lowest template cost.

10. The method of any one of claims 7-9, wherein the method comprises:

obtaining a transform coefficient; and
performing inverse transform of the transform coefficient using the transform kernel to decode the current block.

11. The method of any one of claims 7-10, wherein determining whether to perform the template cost analysis comprises:

determining that at least one special intra mode is enabled, wherein the at least one special intra mode comprises at least one of a matrix-based intra prediction (MIP) mode, an extrapolation filter-based intra prediction (EIP) mode, an intra template matching prediction (ITMP) mode, a decoder side intra mode derivation (DIMD) mode, a template-based intra mode derivation (TIMD), an intra block copy (IBC) mode or an inter mode;
based on the determination that the at least one special intra mode is enabled, performing the template cost analysis; and

based on the determination that the at least one special intra mode is disabled, skipping the performance the template cost analysis.

12. The method of any one of claims 7-11, wherein obtaining the HoG further comprises:
using at least one neighboring reconstructed sample that is associated with the current block.

13. A video encoding device, comprising:
a processor configured to:

obtain at least one prediction sample associated with a current block;

based on the at least one prediction sample, obtain a histogram of gradient (HoG);

determine whether to perform a template cost analysis;

based on a determination to perform the template cost analysis, obtain at least one intra mode candidate based on the HoG;

determine a respective template cost associated with the at least one intra mode candidate;

reorder the at least one intra mode candidate based on the respective template cost;

based on the at least one intra mode candidate, obtain at least one virtual intra prediction mode (VIPM);

based on the at least one VIPM, obtain a transform set;

based on the transform set, obtain a transform kernel; and

encode the current block based on the transform kernel.

14. The video encoding device of claim 13, wherein to determine whether to perform the template cost analysis comprises the processor being configured to:

determine that the HoG shows a strong directionality;

based on the determination that the HoG does not show the strong directionality, perform the template cost analysis; and

based on the determination that the HoG shows the strong directionality, skip performing the template cost analysis.

15. A method for video encoding device comprising:

obtaining at least one prediction sample associated with a current block;

based on the at least one prediction sample, obtaining a histogram of gradient (HoG);

determining whether to perform a template cost analysis;

based on a determination to perform the template cost analysis, obtaining at least one intra mode candidate based on the HoG;

determining a respective template cost associated with the at least one intra mode

candidate; reordering the at least one intra mode candidate based on the respective template cost;

based on the at least one intra mode candidate, obtaining at least one virtual intra prediction mode (VIPM);

based on the at least one VIPM, obtaining a transform set;

based on the transform set, obtaining a transform kernel; and

encoding the current block based on the transform kernel.

FIG. 1

FIG. 2

**FIG. 3**

EP 4 765 803 A1

EP 4 765 803 A1

**FIG. 4**

FIG. 5

FIG. 6

**FIG. 7**

input of EIP

output of EIP

FIG. 8

FIG. 9

**FIG. 10**

EP 4 765 803 A1

Intra_pred_mode0

Partition_mode

Intra_pred_mode1

```
If( cu_sgpm_flag )
{
  partition_mode_idx
  intra_pred_mode0_idx
  intra_pred_mode1_idx
}
```

```
If( cu_sgpm_flag )
{
  sgpm_cand_idx
}
```

partition_mode_idx
intra_pred_mode0_idx
intra_pred_mode1_idx

# FIG. 11

**FIG. 12**

**FIG. 13**

FIG. 14

**FIG. 15**

EP 4 765 803 A1

FIG. 16

FIG. 17

FIG. 18

start

Obtain prediction samples

Obtain Histogram of Gradients (HoG)

Obtain MTSS flag ($mtssFlag$)

$mtssFlag$ == 1 ?

False

True

Obtain $VIPM_1$ in HoG

Obtain $VIPM_2$ in HoG

Obtain transform set corresponding to $VIPM_1$

Obtain transform set corresponding to $VIPM_2$

Obtain the transform kernel in the transform set

Obtain transform coefficients

Apply inverse transform

end

**FIG. 19**

start

↓

Obtain prediction
samples

↓

Obtain Histogram of
Gradients (HoG)

↓

Obtain VIPM from HoG

↓

Obtain transform set
corresponding to VIPM

↓

Obtain the transform kernel in
the transform set

↓

Obtain transform
coefficients

↓

Apply inverse transform

↓

end

**FIG. 20**

start

Obtain prediction
samples

Obtain Histogram of
Gradients (HoG)

Obtain N intra mode
candidates from the HoG

Reorder the N candidates
based on their template cost

Infer the VIPM from the
candidate with the lowest
template cost

Obtain transform set
corresponding to the VIPM

Obtain the transform kernel in
the transform set

Obtain transform
coefficients

Apply inverse transform

end

# FIG. 21

start

Obtain prediction
samples

Obtain Histogram of
Gradients (HoG)

Obtain N intra mode
candidates from the HoG

Reorder the N candidates
based on their template cost

**False** ← $mtssFlag$
$== 1$ ? → **True**

$VIPM_1$ is the 1st candidate in
the reorder list

$VIPM_2$ is the 2nd candidate in
the reorder list

Obtain transform set
corresponding to $VIPM_1$

Obtain transform set
corresponding to $VIPM_2$

Obtain the transform kernel in
the transform set

Obtain transform
coefficients

Apply inverse transform

end

# FIG. 22

**EUROPEAN SEARCH REPORT**

**Application Number**

EP 24 30 7288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BONNINEAU (INTERDIGITAL) C ET AL: "AHG12: Multiple Transform Set Selection for Intra MTS", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0307 ; m67917 21 April 2024 (2024-04-21), XP030317790, Retrieved from the Internet: URL:https://jvet-experts.org/doc_end_user/documents/34_Rennes/wg11/JVET-AH0307-v4.zip JVET-AH0307-v5.docx [retrieved on 2024-04-21] * the whole document * ----- | 1-15 | INV. H04N19/11 H04N19/12 H04N19/176 H04N19/593 |
| Y | BONNINEAU (INTERDIGITAL) C ET AL: "EE2-4.5: Multiple Transform Set Selection for Intra MTS", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0064 5 July 2024 (2024-07-05), XP030320181, Retrieved from the Internet: URL:https://jvet-experts.org/doc_end_user/documents/35_Sapporo/wg11/JVET-AI0064-v1.zip JVET-AI0064-v1.docx [retrieved on 2024-07-05] * the whole document * ----- | 1-15 | TECHNICAL FIELDS SEARCHED (IPC) H04N |
| Y | US 2022/394269 A1 (CAO KEMING [US] ET AL) 8 December 2022 (2022-12-08) * paragraph [0078] - paragraph [0091]; figure 3 * ----- -/-- | 1-15 | |

The present search report has been drawn up for all claims

| Place of search | Date of completion of the search | Examiner |
|---|---|---|
| The Hague | 22 May 2025 | Georgiou, Georgia |

EPO FORM 1503 03.82 (P04C01)

**page 1 of 2**

44

Europäisches
Patentamt

European
Patent Office

Office européen
des brevets

## EUROPEAN SEARCH REPORT

**Application Number**

EP 24 30 7288

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/241347 A1 (MEDIATEK INC [CN]) 21 December 2023 (2023-12-21) * page 8, line 15 - page 9, line 9; figures 5A-5C * * page 17, line 33 - page 19, line 20; figures 13,14 * ----- | 1-15 | |
| A | US 2024/137542 A1 (ZHAO XIN [US] ET AL) 25 April 2024 (2024-04-25) * paragraph [0125] - paragraph [0130]; figure 9 * ----- | 1-15 | |
| A | US 2024/187620 A1 (ZHAO XIN [US] ET AL) 6 June 2024 (2024-06-06) * paragraph [0141]; figure 7 * ----- | 1-15 | |
| A | COBAN M ET AL: "Algorithm description of Enhanced Compression Model 13 (ECM 13)", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH2025 ; m68146 26 June 2024 (2024-06-26), XP030319932, Retrieved from the Internet: URL:https://jvet-experts.org/doc_end_user/documents/34_Rennes/wg11/JVET-AH2025-v1.zip JVET-AH2025-v1.docx [retrieved on 2024-06-26] * section [3.3.4 Enhanced MTS for intra coding] * ----- | 1-15 | TECHNICAL FIELDS SEARCHED (IPC) |

The present search report has been drawn up for all claims

| Place of search | Date of completion of the search | Examiner |
|---|---|---|
| The Hague | 22 May 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 7288

This annex lists the patent family members relating to the patent documents cited in  the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | | Publication date |
|---|---|---|---|---|
| US 2022394269 A1 | 08-12-2022 | NONE | | |
| WO 2023241347 A1 | 21-12-2023 | CN | 119698832 A | 25-03-2025 |
| | | TW | 202406334 A | 01-02-2024 |
| | | WO | 2023241347 A1 | 21-12-2023 |
| US 2024137542 A1 | 25-04-2024 | KR | 20240065135 A | 14-05-2024 |
| | | US | 2024137542 A1 | 25-04-2024 |
| | | WO | 2024086725 A1 | 25-04-2024 |
| US 2024187620 A1 | 06-06-2024 | KR | 20240090275 A | 21-06-2024 |
| | | US | 2024187620 A1 | 06-06-2024 |
| | | WO | 2024086715 A1 | 25-04-2024 |

EPO FORM P0459

For more details about this annex : see Official Journal of the European Patent Office, No. 12/82